(19) Europäisches Patentamt
European Patent Office
Office européen des brevets

(11) **EP 3 450 212 B1**

(12) **EUROPEAN PATENT SPECIFICATION**

(45) Date of publication and mention
of the grant of the patent:
**24.06.2020 Bulletin 2020/26**

(51) Int Cl.:
*B60C 11/04* *(2006.01)*    *B60C 11/12* *(2006.01)*
*B60C 11/13* *(2006.01)*    *B60C 11/03* *(2006.01)*
*B60C 11/00* *(2006.01)*

(21) Application number: **17789123.1**

(22) Date of filing: **16.03.2017**

(86) International application number:
**PCT/JP2017/010793**

(87) International publication number:
**WO 2017/187834 (02.11.2017 Gazette 2017/44)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2016 JP 2016091311**

(43) Date of publication of application:
**06.03.2019 Bulletin 2019/10**

(60) Divisional application:
**19197060.7 / 3 597 450**

(73) Proprietor: **Bridgestone Corporation**
**Tokyo 104-8340 (JP)**

(72) Inventors:
• **NAKAI Tatsuya**
**Tokyo 104-8340 (JP)**

• **MATSUNAGA Ietomo**
**Tokyo 104-8340 (JP)**
• **MAEKAWA Kazuhiro**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
EP-A1- 1 074 405    WO-A1-2015/182151
WO-A1-2016/056168    JP-A- H03 182 811
JP-A- 2000 168 314    JP-A- 2012 116 410
JP-A- 2014 156 190    JP-A- 2015 030 415
JP-A- 2015 182 680

**Description**

TECHNICAL FIELD

The present disclosure relates to a tire, and especially to a tire having excellent motion performance on both a dry road surface and a wet road surface.

BACKGROUND

Typically, the tread of a tire has two or more circumferential grooves extending in the circumferential direction of the tread. The circumferential grooves ensure the drainage performance of the tire. Moreover, by increasing the footprint area of each land portion defined by the circumferential grooves, the motion performance of the tire on a dry road surface is improved. Further, by removing water between the footprint of the land portion and the road surface, the footprint area of the land portion during running on a wet road surface is ensured, and the motion performance of the tire on a wet road surface is improved.

Water within the footprint of the land portion can be easily drained from the footprint of the land portion toward the grooves, by reducing the ground contact pressure at the ends of the land portion. A conventional pneumatic tire proposed for such reduction in ground contact pressure has a land portion having an arc-shaped surface to reduce the ground contact pressure at the ends of the land portion (see JP 2012-116410 A (PTL 1)). The tire described in PTL 1 also has sipes in the land portion, to ensure drainage performance.

CITATION LIST

Patent Literature

PTL 1: JP 2012-116410 A

Reference is also made to WO 2015/182151, which discloses a tire according to the preamble of Claim 1.

SUMMARY

(Technical Problem)

Reducing the ground contact pressure at the ends of the land portion in the pneumatic tire, however, causes a decrease in motion performance particularly on a dry road surface. Thus, with regard to the technique disclosed in PTL 1, not only improved motion performance on a wet road surface but also improved motion performance on a dry road surface is desired.

It could therefore be helpful to provide a tire having excellent motion performance on both a dry road surface and a wet road surface.

(Solution to Problem)

Keen examination conducted to solve the problem stated above has led to discoveries that both dry performance and wet performance can be achieved by satisfying predetermined relationships among the rubber property of the land portion, the depth of the circumferential grooves defining the land portion, and the sipes formed in the land portion. A tire according to the present disclosure comprises a tread having a tread surface on which one or more land portions are defined by two or more circumferential grooves extending in a circumferential direction of the tread, wherein the one or more land portions each have a plurality of sipes extending in a direction traversing an equator of the tire and spaced from each other in the circumferential direction of the tread, and a dynamic elastic modulus E' at 30 °C of a rubber composition forming the one or more land portions, a number N of the plurality of sipes, and a depth D of the circumferential grooves satisfy $0.009 \leq E'/(N \times D) \leq 0.029$. The circumferential grooves include four circumferential grooves, the one or more land portions include three land portions, the three land portions being defined between the four circumferential grooves, and a width of a land portion at a center of the three land portions is in a range of 90 % to 130 % of a width of each of land portions on both sides thereof.

(Advantageous Effect)

It is thus possible to provide a tire having excellent motion performance on both a dry road surface and a wet road surface.

BRIEF DESCRIPTION OF THE DRAWINGS

In the accompanying drawings:

FIG. 1 is a plan view illustrating a tread pattern of a tire according to one of the disclosed embodiments;
FIG. 2 is a cross-sectional view of a land portion in the width direction of the tread;
FIG. 3 is a diagram illustrating the behavior of a sipe end of a land portion during straight running;
FIG. 4 is a diagram illustrating changes in ground contact pressure for different descending amounts of a land portion; and
FIG. 5 is a cross-sectional view of another land portion in the width direction of the tread.

DETAILED DESCRIPTION

One of the disclosed embodiments is described below, with reference to drawings. A tire 1 in this embodiment is, for example, a pneumatic tire for passenger vehicles. The tire structure complies with a usual structure of tires of this type.

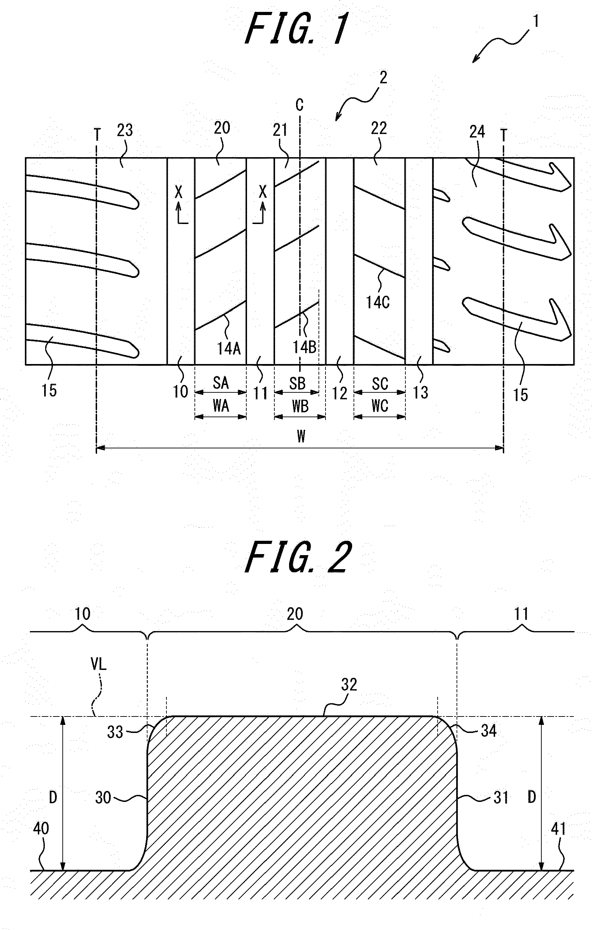

FIG. 1 is a plan view illustrating the tread pattern of the tire 1 in this embodiment. The tire 1 has, on the tread surface of the tread 2 of the tire 1, four circumferential grooves 10 to 13 in the example in FIG. 1, extending in the circumferential direction of the tread 2. The tire 1 has three land portions 20 to 22 in the example in FIG. 1, defined by the circumferential grooves 10 to 13. In detail, the circumferential grooves 11 and 12 define the center land portion 21 located on the equator C of the tire. The circumferential grooves 10 and 13 are located on the tread edge T sides of the circumferential grooves 11 and 12. The circumferential grooves 10 and 11 define the middle land portion 20 on one side of the center land portion 21. The circumferential grooves 12 and 13 define the middle land portion 22 on the other side of the center land portion 21. As illustrated in FIG. 1, the middle land portions 20 and 22 are located on both sides of the center land portion 21, each with one groove therebetween. Thus, the four circumferential grooves 10 to 13 define the three land portions 20 to 22 along the tire circumferential direction of the tread 2. Further, in the example in FIG. 1, the circumferential groove 10 and the tread edge T defines a shoulder land portion 23, and the circumferential groove 13 and the tread edge T defines a shoulder land portion 24. Of these land portions, the land portions 20 to 22 each have a plurality of sipes 14A to 14C extending in a direction traversing the equator C of the tire and spaced from each other in the circumferential direction of the tread 2.

The sipes 14A to 14C may be any sipes extending in a direction traversing the equator C of the tire. Although each sipe extends at a predetermined angle with respect to the tire width direction in the example in FIG. 1, the sipe may extend along the tire width direction. Moreover, at least one of both ends of each of the sipes 14A to 14C communicates with any of the circumferential grooves 10 to 13. For example, the sipe 14B in FIG. 1 has one end communicating with the circumferential groove 11 and the other end terminating within the land portion without reaching the circumferential groove 12. Thus, the lengths SA to SC of the sipes 14A to 14C projected in the tire circumferential direction are respectively 85 % or more of the widths WA to WC of the land portions 20 to 22. In the example in FIG. 1, the length SB of the sipe 14B projected in the tire circumferential direction is about 90 % of the width WB of the land portion 21. The lengths SA and SC of the sipes 14A and 14C projected in the tire circumferential direction are respectively equal to the width WA of the land portion 20 and the width WC of the land portion 22.

The shoulder land portions 23 and 24 each have a plurality of width direction grooves 15. The width direction grooves 15 extend from within each of the shoulder land portions 23 and 24 toward the tread edge T approximately in the tire width direction, and contribute to drainage in the shoulder land portions 23 and 24.

(Achieving both dry performance and wet performance)

How to achieve both the dry performance and the wet performance of the tire 1 according to this embodiment is examined below. An effective way of enhancing the dry performance of the tire 1 is to improve the rigidity of the land portions 20 to 22. In detail, when the dynamic elastic modulus E' per unit footprint area of the rubber composition forming the center land portion 21 and the middle land portions 20 and 22 is higher, the rigidity is improved, and consequently the dry performance is enhanced. Moreover, when the depth D of the circumferential grooves 10 to 13 is shallower, the rigidity of the center land portion 21 and the middle land portions 20 and 22 is improved, and consequently the dry performance is enhanced.

An effective way of enhancing the wet performance of the tire 1 is to improve the drainage performance. When the number of sipes of each of the center land portion 21 and the middle land portions 20 and 22 is larger, the drainage performance is improved, and consequently the wet performance is enhanced. Moreover, when the depth D of the circumferential grooves 10 to 13 is deeper, the drainage performance of the center land portion 21 and the middle land portions 20 and 22 is improved, and consequently the wet performance is enhanced.

Thus, there is some parameter, such as the depth D of the circumferential grooves 10 to 13, whose settings in the case of improving the dry performance and in the case of improving the wet performance are mutually contradictory. Introducing an index combining the above-mentioned elements has led to findings that both the dry performance and the wet performance of the tire 1 can be achieved by setting the index to an appropriate range (i.e. achieving a balance). This index increases in value in a direction of improving the dry performance, and decreases in value in a direction of improving the wet performance. Based on such an index, a lower limit value $L_{min}$ and an upper limit value $L_{max}$ for the index to achieve both the dry performance and the wet performance of the tire 1 have then been set. The relational expression of the index is defined as the following Expression (1). In Expression (1), N is the number of sipes of each land portion of the center land portion 21 and the middle land portions 20 and 22.

$$L_{min} \leq E'/(N \times D) \leq L_{max} \qquad ... \text{ Expression (1)}.$$

The index $(E'/(N \times D))$ in Expression (1) increases when the dynamic elastic modulus E' is increased (the dry performance is improved). The index in Expression (1) also increases when the depth D of the circumferential grooves 10 to 13 is decreased (the dry performance is improved as a result of the grooves being shallower). On the other hand, the index in Expression (1) decreases when the depth D of the circumferential grooves 10 to 13 is increased (the wet performance is improved as a result of the grooves being deeper). The index in Expression (1) also decreases when the number N of sipes is increased (the wet performance is improved as a result of the number of sipes being larger).

Here, the parameters of the index in Expression (1) are correlated with each other as follows, in order to achieve both the dry performance and the wet performance of the tire 1. For example, suppose the dynamic elastic modulus E' is available in a range of $E'_{min}$ to $E'_{max}$, and the number N of sipes is available in a range of $N_{min}$ to $N_{max}$ in terms of design. As an example, in the case of selecting $E'_{max}$ as the dynamic elastic modulus E' (in the case of maximizing the dry performance), $N_{max}$ is selected as the number N of sipes (the wet performance is maximized) to achieve a balance between the dry performance and the wet performance. Conversely, in the case of selecting $E'_{min}$ as the dynamic elastic modulus E' (in the case of minimizing the dry performance), $N_{min}$ is selected as the number N of sipes (the wet performance is minimized).

Various experiments conducted in view of the above yielded the test results described in the "EXAMPLES" section given below. Based on these evaluation results, 0.009 as the lower limit value $L_{min}$ and 0.029 as the upper limit value $L_{max}$ have been newly identified. Using these specific values transforms Expression (1) into the following Expression (2).

$$0.009 \leq E'/(N \times D) \leq 0.029 \qquad ... \text{ Expression (2)}.$$

The tire 1 satisfying Expression (2) has improved motion performance on both a dry road surface and a wet road surface. The values of the parameters in Expression (2) are preferably in the following ranges:

dynamic elastic modulus E': 6.8 to 12.9 [MPa]
number N of sipes: 60 to 90
depth D of circumferential grooves: 6.5 to 8.9 [mm].

Here, the surfaces of the land portions 20 to 22 are approximately flat in a cross section of the land portions 20 to 22 in the tire width direction. The land portion shape is described in detail below, taking as an example the middle land portion 20 out of the center land portion 21 and the middle land portions 20 and 22.

FIG. 2 is a cross-sectional view of the middle land portion 20 in the tire width direction. FIG. 2 corresponds to an X-X cross section in FIG. 1. As illustrated in FIG. 2, the middle land portion 20 has wall surfaces 30 and 31, a surface 32, and a pair of chamfers 33 and 34 of the surface 32. The wall surfaces 30 and 31 are the side wall surfaces of the middle land portion 20 defined by the circumferential grooves 10 and 11. The wall surface 30 is connected to the groove bottom 40 of the circumferential groove 10, and also connected smoothly to the surface 32 via the chamfer 33. The wall surface 31 is connected to the groove bottom 41 of the circumferential groove 11, and also connected smoothly to the surface 32 via the chamfer 34. The surface 32 comes into contact with the road surface when the tire 1 is rolling. The pair of chamfers 33 and 34 are the ends of the land portion 20 located between the surface 32 and the wall surface 30 and between the surface 32 and the wall surface 31, respectively. A virtual contour line VL in FIG. 2 is a virtual line which is an extension of the surface 32 in the tire width direction involving the regions of the circumferential grooves 10 and 11.

In the example in FIG. 2, the circumferential grooves 10 and 11 both have a depth D. The depth D of the circumferential grooves 10 and 11 is a depth with respect to the virtual contour line VL. In detail, the depth D of the circumferential grooves 10 and 11 is the distance from the virtual contour line VL to the groove bottoms 40 and 41 (deepest portions). The width WA of the middle land portion 20 (see FIG. 1) is equal to the interval (distance) between the wall surfaces 30 and 31. The width WB of the center land portion 21 and the width WC of the middle land portion 22 (see FIG. 1) are also respectively equal to the wall surface intervals of the center land portion 21 and the middle land portion 22.

In the tire 1, the total width of the land portions except the shoulder land portions 23 and 24 (i.e. the sum of the lengths of the center land portion 21 and the middle land portions 20 and 22 in the width direction) is preferably in a range of 28 [%] to 48 [%] of the total width W of the tread (see FIG. 1). As a result of the width ratio being 28 [%] or more, a sufficient footprint area of the tire 1 is maintained. This ensures excellent dry performance. As a result of the width ratio being 48 [%] or less, a width (distance in the tire width direction) necessary for drainage of the circumferential grooves 10 to 13 is maintained. This ensures excellent wet performance. In the example in FIG. 1, the total width of the land portions except the shoulder land portions 23 and 24 is the sum (WA + WB + WC) of the width WB of the center land portion 21, the width WA of the middle land portion 20, and the width WC of the middle land portion 22. It has been found out that, to further improve the performance of the tire 1, the width ratio, i.e. (WA + WB + WC)/W, is more preferably in a range of 33 [%] to 43 [%], and most preferably in a range of 35 [%] to 41 [%].

In the tire 1, the width WB of the center land portion 21 at the center of the three land portions 20 to 22 is in a range of 90 [%] to 130 [%] of each of the widths WA and WC of the middle land portions 20 and 22 on both sides. The width WB of the center land portion 21 at the center is further preferably in a range of 95 [%] to 120 [%] of each of the widths WA and WC of the middle land portions 20 and 22 on both sides. The width WB of the center land portion 21 at the center is most preferably in a range of 95 [%] to 105 [%] of the widths WA and WC of the middle land portions 20 and 22 on both sides.

Thus, the width WB of the center land portion 21 does not differ greatly from each of the widths WA and WC of the middle land portions 20 and 22. This enhances the effect of suppressing uneven wear for the center land portion 21 and the middle land portions 20 and 22.

In the tire 1, the center land portion 21 is preferably located on the equator C of the tire. Thus, the center land portion 21 and the middle land portions 20 and 22 are arranged with the equator C of the tire as a center (or an approximate center) in a balanced manner. This further enhances the effect of suppressing uneven wear for the center land portion 21 and the middle land portions 20 and 22.

The tire 1 illustrated in FIG. 1 has the tread pattern in which the sipes 14A, 14B, and 14C and the width direction grooves 15 extend in a direction converging toward the equator C of the tire. It is therefore preferable to mount the tire 1 on a vehicle with this convergence direction coinciding with the direction of travel of the vehicle, in terms of achieving the performance of the tire 1 sufficiently.

(Convexly-shaped land portion)

In the foregoing example, the surfaces of the center land portion 21 and the middle land portions 20 and 22 are flat in a cross section in the tire width direction. Alternatively, the surfaces of the center land portion 21 and the middle land portions 20 and 22 may be convex in a cross section in the tire width direction, as described below. The features of the center land portion 21 and the middle land portions 20 and 22 having such a shape are described below. The following describes the land portion shape in detail, taking as an example one land portion (middle land portion 20).

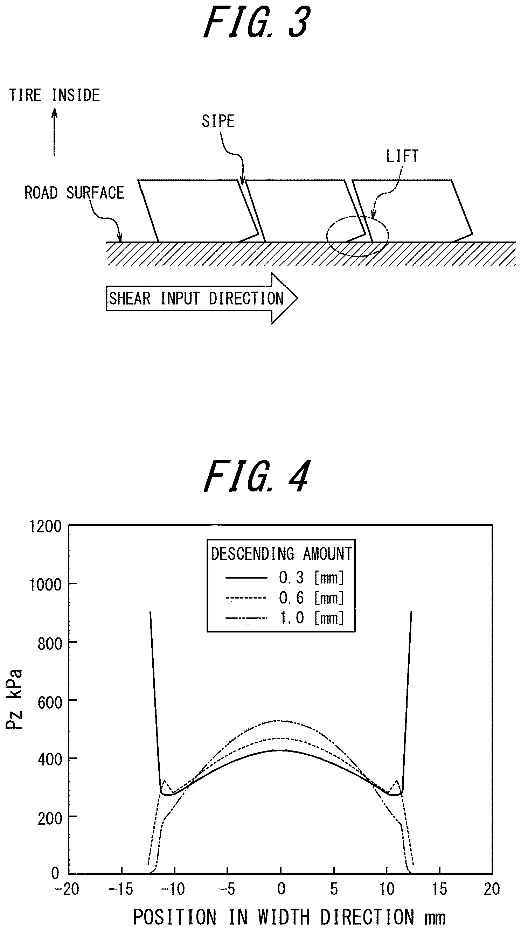

FIG. 3 is a diagram illustrating a situation in which a tire including a land portion (e.g. the center land portion 21 in FIG. 1) having a plurality of sipes (e.g. 14B in FIG. 1) is running straight. As illustrated in FIG. 3, when the tire deforms in the tire circumferential direction during straight running, a phenomenon in which an end on either side of a sipe of the land portion is lifted off the road surface may occur. This phenomenon tends to be more noticeable when the number of sipes is larger. If this phenomenon occurs, the footprint area of the land portion decreases, so that the rigidity decreases.

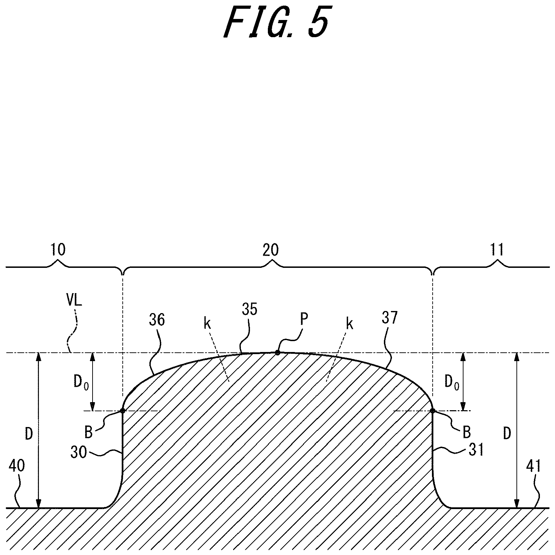

A descending amount is described below. FIG. 5 is a cross-sectional view of the convexly-shaped middle land portion 20 in the tire width direction. Although one land portion (middle land portion 20) in FIG. 5 is taken as an example here, not only the surface of the middle land portion 20 but also the surfaces of the center land portion 21 and the middle land portion 22 are convex in a cross section in the tire width direction as illustrated in FIG. 5. As illustrated in FIG. 5, a cross section of the middle land portion 20 in the tire width direction projects most outward in the tire radial direction at an apex P. In the example in FIG. 5, the apex P is on a curved portion 35 located at the center of curved portions 35 to 37. A virtual contour line VL in FIG. 5 is a virtual line which is an extension, in the tire width direction, of a tangent at the apex P of the curved portion 35. The descending amount is an amount with respect to the apex P (or the virtual contour line VL). The descending amount is the distance from the apex P (or the virtual contour line VL) to each opening edge B. The opening edge B mentioned here is each of the edge of the linear wall surface 30 connected to the curved portion 36 (i.e. the end of the curved portion 36 on the wall surface 30 side) and the edge of the linear wall surface 31 connected to the curved portion 37 ((i.e. the end of the curved portion 37 on the wall surface 31 side). In the example in FIG. 5, the descending amount on the wall surface 30 side and the descending amount on the wall surface 31 side are both $D_0$.

FIG. 4 illustrates the ground contact pressure Pz of a land portion whose surface is convex in a cross section in the tire width direction. The horizontal axis in FIG. 4 represents the position in the tire width direction. In the horizontal axis in FIG. 4, the land portion center is set to 0, and each position on the vehicle outer side is represented as a positive value and each position on the vehicle inner side is represented as a negative value. The vertical axis in FIG. 4 represents the ground contact pressure Pz in kPa. FIG. 4 illustrates the distribution of the ground contact pressure Pz of the tire for each of the descending amounts of 0.3 [mm], 0.6 [mm], and 1.0 [mm].

In the case where the land portion is convexly shaped in a cross section in the tire width direction, the footprint area at the ends in the tire width direction decreases but the ground contact pressure increases at the land portion center, because of the shape. In the example in FIG. 4, with increasing descending amount of 0.3 [mm], 0.6 [mm], and 1.0 [mm], the ground contact pressure at the land portion center (position in width direction = 0) increases as about 420 [kPa], about 490 [kPa], and about 530 [kPa]. When a tire deforms in the tire circumferential direction during straight running, a phenomenon in which an end of a sipe of a land portion is lifted off the road surface may occur, as mentioned above with reference to FIG. 3. By forming the land portion in convex shape in a cross section, however, the ground contact pressure at the land portion center increases, so that the phenomenon of the end of the sipe being lifted off the road surface can be suppressed. While the suppression effect depends on the descending amount as mentioned above, the suppression effect is achieved at least at the land portion center, as compared with the case where the surface of the land portion is flat in a cross section in the tire width direction. Thus, by convexly shaping the land portion in a cross section in the tire width direction, a decrease in rigidity (a decrease in dry performance) caused by the phenomenon of the end of the sipe being lifted off the road surface can be suppressed. Particularly in the case where the number of sipes is increased to improve wet performance, the influence of the decrease in rigidity tends to be greater. In such a case, it is particularly preferable to convexly shape the land portion in a cross section in the tire width direction.

A cross-sectional view of the convexly-shaped middle land portion 20 in the tire width direction is described below with reference to FIG. 5 again. The tread pattern is the same as the foregoing example (see FIG. 1). In FIG. 5, the same elements as those in FIGS. 1 and 2 are given the same reference signs. Detailed description of these elements is omitted here, to avoid repeated explanation. As illustrated in FIG. 5, the middle land portion 20 has the wall surfaces 30 and 31 and the plurality of arc-shaped curved portions 35 to 37. The middle land portion 20 has a surface that is formed by smoothly connecting the curved portions 35 to 37 in a cross section in the tire width direction to be convex (projecting) outward in the radial direction of the tire 1. As illustrated in FIG. 5, the plurality of curved portions 35 to 37 are smoothly connected even at boundaries K (indicated by dotted lines in FIG. 5), as a result of which the entire surface of the middle land portion 20 forms a smoothly curved surface (convex surface).

In the example in FIG. 5, the circumferential grooves 10 and 11 both have a depth of D. The depth D of the circumferential grooves 10 and 11 is a depth with respect to the apex P (or the virtual contour line VL), too. Thus, in the example in FIG. 5, the entire surface of each of the center land portion 21 and the middle land portions 20 and 22 of the tire 1 forms a smoothly curved surface. A decrease in rigidity caused by the phenomenon of the end of the sipe being lifted off the road surface can therefore be suppressed. This effect of suppressing a decrease in rigidity can further improve the motion performance on a dry road surface and a wet road surface.

The tire 1 preferably satisfies the following Expression (3) between the descending amount $D_0$ and the depth D of the circumferential grooves.

$$0.044 \leq D_0/D \leq 0.155 \qquad \ldots \text{Expression (3)}.$$

The parameters used in Expression (3) are the depth D of the circumferential grooves and the descending amount $D_0$. When the depth D of the circumferential grooves increases, the rigidity of the land portion decreases. When the descending amount $D_0$ increases, the rigidity of the land portion decreases, too. Expression (3) limits the ratio of these parameters to an appropriate range, thus avoiding, for example, setting the descending amount $D_0$ and the depth D of the circumferential grooves both high and maintaining the rigidity of the land portion. Various experiments conducted in view of the above yielded the test results described in the "EXAMPLES" section given below. Based on these evaluation results, 0.044 as a lower limit value and 0.155 as an upper limit value have been newly identified. As a result of the depth D of the circumferential grooves and the descending amount $D_0$ satisfying Expression (3), an extreme decrease in the rigidity of the land portion can be avoided.

EXAMPLES

To determine the advantageous effects of the tire 1 according to one of the disclosed embodiments, tires according to Examples 1 to 5 and Comparative Examples 1 to 2 were experimentally produced, and subjected to the following tests to evaluate their performance. The specifications of each tire are listed in Table 1. The tire of Example 1 has the tread pattern illustrated in FIG. 1. The tread of the tire of Example 1 has the cross section illustrated in FIG. 5. Comparative Examples 1 to 2 and Examples 2 to 5 are the same as Example 1, except the specifications listed in Table 1.

Each tire of tire size 255/40R18 was attached to an applicable rim, filled to a prescribed internal pressure, and put to the following tests.

<Dry performance>

For each tire, running performance when running on a dry road surface was evaluated by sensory assessment by a driver. The evaluation was made in a relative value, with the evaluation result of the tire of Comparative Example 1 being 100. A larger value indicates better high speed running performance.

<Wet performance>

For each tire, running performance when running on a wet road surface was evaluated by sensory assessment by a driver. The evaluation was made in a relative value, with the evaluation result of the tire of Comparative Example 1 being 100. A larger value indicates better drainage performance.

<Uneven wear resistance>

For each tire, the wear amount near the groove edges of the circumferential grooves was measured after running 10,000 km on a drum, and evaluated as an index with the wear amount of the tire of Comparative Example 1 being 100. A larger value indicates a smaller wear amount, and better uneven wear resistance.

These evaluation results are listed in the following Table 1 together with the specifications of the tires.

[Table 1]

| | Number N of sipes | Circumferential groove depth D [mm] | Descending amount $D_0$ [mm] | E' [MPa] | E'/(N×D) [MPa/mm] |
|---|---|---|---|---|---|
| Comp. Ex. 1 | 60 | 8 | 0.3 | 14.4 | 0.03 |
| Comp. Ex. 2 | 90 | 8.9 | 0.3 | 6.8 | 0.0085 |
| Ex. 1 | 68 | 8 | 1 | 10.0 | 0.0184 |
| Ex. 2 | 68 | 8 | 1 | 6.5 | 0.012 |
| Ex. 3 | 60 | 7.5 | 0.6 | 12.2 | 0.027 |
| Ex. 4 | 68 | 8 | 1.3 | 6.5 | 0.012 |
| Ex. 5 | 68 | 8 | 0.3 | 10.9 | 0.02 |
| Ex. 6 | 68 | 8 | 1 | 10.0 | 0.0184 |
| Ex. 7 | 68 | 8 | 1 | 10.0 | 0.0184 |
| Ex. 8 | 68 | 8 | 1 | 10.0 | 0.0184 |
| Ex. 9 | 68 | 8 | 1 | 10.0 | 0.0184 |
| | Total width of center land portion and middle land portions (ratio to total width of tread [%]) | Width of center land portion (ratio to middle land portion [%]) | $D_0/D$ | dry performance | wet performance | uneven wear resistance |
| Comp. Ex. 1 | 38 | 120 | 0.038 | 100 | 100 | 100 |
| Comp. Ex. 2 | 38 | 120 | 0.034 | 80 | 120 | 90 |

(continued)

| | Total width of center land portion and middle land portions (ratio to total width of tread [%]) | Width of center land portion (ratio to middle land portion [%]) | $D_0/D$ | dry performance | wet performance | uneven wear resistance |
|---|---|---|---|---|---|---|
| Ex. 1 | 38 | 100 | 0.12 | 105 | 110 | 110 |
| Ex. 2 | 41 | 100 | 0.12 | 97 | 115 | 97 |
| Ex. 3 | 38 | 100 | 0.08 | 105 | 105 | 105 |
| Ex. 4 | 38 | 100 | 0.1625 | 90 | 120 | 93 |
| Ex. 5 | 38 | 100 | 0.038 | 103 | 103 | 105 |
| Ex. 6 | 38 | 108 | 0.125 | 107 | 107 | 103 |
| Ex. 7 | 38 | 92 | 0.125 | 102 | 110 | 103 |
| Ex. 8 | 50 | 100 | 0.125 | 110 | 105 | 90 |
| Ex. 9 | 33 | 100 | 0.125 | 100 | 110 | 90 |

As shown in Table 1, the tires of Examples 1 to 9 all achieved both dry performance and wet performance at high level, as compared with the tires of Comparative Examples 1 to 2. Moreover, the uneven wear resistance was improved by limiting the total width of the center land portion and the middle land portions to the above-mentioned predetermined range.

As described above, the tire 1 according to the embodiment described above has excellent motion performance on both a dry road surface and a wet road surface.

While the disclosed techniques have been described above by way of drawings and embodiments, various changes or modifications may be easily made by those of ordinary skill in the art based on the present disclosure. Such various changes or modifications are therefore included in the scope of the present disclosure. For example, means, etc. may be rearranged without logical inconsistency, and a plurality of means, etc. may be combined into one means, etc. and a means, etc. may be divided into a plurality of means, etc.

Although the foregoing embodiment describes the case where the dynamic elastic modulus E' per unit footprint area of the rubber composition forming the center land portion 21 and the middle land portions 20 and 22 is determined by its relationships with the number N of sipes and the depth D of the circumferential grooves, the dynamic elastic modulus E' may be further associated with a loss tangent tan $\delta$. The loss tangent tan $\delta$ denotes the loss tangent at each predetermined temperature under the conditions of a frequency of 52 Hz, an initial strain of 2 %, and a dynamic strain of 1 %. The dynamic elastic modulus E' denotes the dynamic storage modulus at each predetermined temperature under these conditions. A test conducted using a viscoelastic spectrometer produced by Toyo Seiki Seisaku-sho, Ltd. yielded the following values. For example, the rubber composition may have a center value of the dynamic elastic modulus E' at 30 °C of 10.5 [MPa], and a center value of the loss tangent tan $\delta$ at 0 °C of 0.823. The center land portion 21 and the middle land portions 20 and 22 may be formed, for example, by a rubber composition whose dynamic elastic modulus E' at 30 °C is in a range of 8.9 to 12.1 [MPa] and whose loss tangent tan $\delta$ at 0 °C is in a range of 0.700 to 0.946. A rubber composition whose dynamic elastic modulus E' at 30 °C is in a range of 9.5 to 11.6 [MPa] and whose loss tangent tan $\delta$ at 0 °C is in a range of 0.741 to 0.905 is further preferable. A rubber composition whose dynamic elastic modulus E' at 30 °C is in a range of 10.0 to 11.0 [MPa] and whose loss tangent tan $\delta$ at 0 °C is in a range of 0.782 to 0.864 is most preferable.

INDUSTRIAL APPLICABILITY

It is thus possible to provide a tire having excellent motion performance on both a dry road surface and a wet road surface.

REFERENCE SIGNS LIST

| | |
|---|---|
| 1 | tire |
| 2 | tread |
| 10, 11, 12, 13 | circumferential groove |
| 14A, 14B, 14C | sipe |
| 15 | width direction groove |
| 20, 22 | middle land portion |
| 21 | center land portion |
| 23, 24 | shoulder land portion |
| 30, 31 | wall surface |
| 32 | surface |
| 33, 34 | chamfer |
| 35, 36, 37 | curved portion |
| 40, 41 | groove bottom |
| C | equator of tire |
| D | depth of circumferential grooves |
| $D_0$ | descending amount |
| VL | virtual contour line |

**Claims**

1.  A tire (1) comprising
    a tread (2) having a tread surface on which one or more land portions (20, 21, 22) are defined by two or more circumferential grooves (10, 11, 12, 13) extending in a circumferential direction of the tread (2),
    wherein the one or more land portions (20, 21, 22) each have a plurality of sipes (14A, 14, B, 14C) extending in a direction traversing an equator (C) of the tire (1) and spaced from each other in the circumferential direction of the tread (2), and
    a dynamic elastic modulus E' at 30 °C of a rubber composition forming the one or more land portions (20, 21, 22), a number N of the plurality of sipes (14A, 14, B, 14C), and a depth D of the circumferential grooves (10, 11, 12, 13) satisfy the following expression:

    $$0.009 \quad \text{MPa/mm} \quad \leq E'/(N \times D) \leq \quad 0.029 \text{ MPa/mm};$$

    **characterised in that**:
    the circumferential grooves (10, 11, 12, 13) include four circumferential grooves (10, 11, 12, 13), the one or more land portions include three land portions (20, 21, 22), the three land portions (20, 21, 22) being defined between the four circumferential grooves (10, 11, 12, 13), and a width (WB) of a land portion (21) at a center of the three land portions (20, 21, 22) is in a range of 90 % to 130 % of a width (WA, WC) of each of land portions (20, 22) on both sides thereof.

2.  The tire (1) according to claim 1,
    wherein the total length of the three land portions (20, 21, 22) in a width direction of the tread (2) is in a range of 28 % to 48 % of a total width (W) of the tread (2).

3.  The tire (1) according to claim 1,
    wherein the land portion (21) at the center is located on the equator (C) of the tire (1).

4.  The tire (1) according to any one of claims 1 to 3,
    wherein the one or more land portions (20, 21, 22) each have an apex (P) at which a cross section in a width direction of the tread (2) projects most outward in a radial direction of the tire (1), and
    a distance $D_0$ between the apex (P) and an opening edge (B) of each of the circumferential grooves (10, 11, 12, 13) in the radial direction of the tire (1) and the depth D of the circumferential grooves (10, 11, 12, 13) satisfy the following expression:

$$0.044 \leq D_0/D \leq 0.155.$$

**Patentansprüche**

1.  Reifen (1), der Folgendes umfasst:

    eine Lauffläche (2), die eine Profiloberfläche aufweist, auf der ein oder mehrere Stegabschnitte (20, 21, 22) durch zwei oder mehr umlaufende Rillen (10, 11, 12, 13), die sich in einer Umfangsrichtung der Lauffläche (2) erstrecken, definiert werden,
    wobei der eine oder die mehreren Stegabschnitte (20, 21, 22) jeweils mehrere Lamellen (14A, 14B, 14C) aufweisen, sie sich in einer Richtung, die einen Äquator (C) des Reifens (1) quert, erstrecken und in der Umfangsrichtung der Lauffläche (2) voneinander beabstandet sind, und
    ein dynamischer Elastizitätsmodul E' bei 30°C einer Gummizusammensetzung, die den einen oder die mehreren Stegabschnitte (20, 21, 22) bildet, eine Anzahl N der mehreren Lamellen (14A, 14B, 14C) und eine Tiefe D der umlaufenden Rillen (10, 11, 12, 13) den folgenden Ausdruck erfüllen:

$$0{,}009 \text{ MPa/mm} \leq E'/(N \times D) \leq 0{,}029 \text{ MPa/mm},$$

    **dadurch gekennzeichnet, dass**:
    die umlaufenden Rillen (10, 11, 12, 13) vier umlaufende Rillen (10, 11, 12, 13) einschließen, der eine oder die mehreren Stegabschnitte drei Stegabschnitte (20, 21, 22) einschließen, die drei Stegabschnitte (20, 21, 22) zwischen den vier umlaufenden Rillen (10, 11, 12, 13) definiert werden und eine Breite (WB) eines Stegabschnittes (21) an der Mitte der drei Stegabschnitte (20, 21, 22) in einem Bereich von 90 % bis 130 % einer Breite (WA, WC) jedes der Stegabschnitte (20, 22) auf beiden Seiten derselben liegt.

2.  Reifen (1) nach Anspruch 1,
    wobei die Gesamtlänge der drei Stegabschnitte (20, 21, 22) in einer Breitenrichtung der Lauffläche (2) in einem Bereich von 28 % bis 48 % einer Gesamtbreite der Lauffläche (2) liegt.

3.  Reifen (1) nach Anspruch 1,
    wobei der Stegabschnitt (21) an der Mitte auf dem Äquator (C) des Reifens (1) angeordnet ist.

4.  Reifen (1) nach einem der Ansprüche 1 bis 3,
    wobei der eine oder die mehreren Stegabschnitte (20, 21, 22) jeweils einen Scheitel (P) aufweisen, an dem ein Querschnitt in einer Breitenrichtung der Lauffläche (2) am weitesten in einer Radialrichtung des Reifens (1) nach außen vorspringt, und
    ein Abstand $D_0$ zwischen dem Scheitel (P) und einer Öffnungskante (B) jeder der umlaufenden Rillen (10, 11, 12, 13) in der Radialrichtung des Reifens (1) und der Tiefe D der umlaufenden Rillen (10, 11, 12, 13) den folgenden Ausdruck erfüllen:

$$0{,}044 \leq D_0/D \leq 0{,}155.$$

**Revendications**

1.  Bandage pneumatique (1), comprenant :

    une bande de roulement (2) comportant un surface de bande de roulement sur laquelle sont définies une ou plusieurs parties d'appui (20, 21, 22) par deux rainures circonférentielles (10, 11, 12, 13) ou plus s'étendant dans une direction circonférentielle de la bande de roulement (2) ;
    dans lequel ladite une ou lesdites plusieurs parties d'appui (20, 21, 22) comportent chacune plusieurs lamelles (14A, 14B, 14C) s'étendant dans une direction traversant un équateur (C) du bandage pneumatique (1) et espacées les unes des autres dans la direction circonférentielle de la bande de roulement (2) ; et
un module d'élasticité dynamique E' à 30°C d'une composition de caoutchouc formant ladite une ou lesdites plusieurs parties d'appui (20, 21, 22), un nombre N des plusieurs lamelles (14A, 14B, 14C) et une profondeur D des rainures circonférentielles (10, 11, 12, 13) satisfont l'expression ci-dessous :

$$0{,}009 \text{ MPa/mm} \leq E'/(N \times D) \leq 0{,}029 \text{ MPa/mm} ;$$

**caractérisé en ce que** :
les rainures circonférentielles (10, 11, 12, 13) incluent quatre rainures circonférentielles (10, 11, 12, 13), ladite une ou lesdites plusieurs parties d'appui incluant trois parties d'appui (20, 21, 22), les trois parties d'appui (20, 21, 22) étant définies entre les quatre rainures circonférentielles (10, 11, 12, 13), et une largeur (WB) d'une partie d'appui (21) au niveau d'un centre des trois parties d'appui (20, 21, 22) étant comprise dans un intervalle représentant 90% à 130% d'une largeur (WA, WC) de chacune des parties d'appui (20, 22), sur les deux côtés de celles-ci.

2. Bandage pneumatique (1) selon la revendication 1,
dans lequel la longueur totale des trois parties d'appui (20, 21, 22), dans une direction de la largeur de la bande de roulement (2), est comprise dans un intervalle représentant 28% à 48% d'une largeur totale (W) de la bande de roulement (2).

3. Bandage pneumatique (1) selon la revendication 1,
dans lequel la partie d'appui (21) au niveau du centre est située sur l'équateur (C) du bandage pneumatique (1).

4. Bandage pneumatique (1) selon l'une quelconque des revendications 1 à 3,
dans lequel ladite une ou lesdites plusieurs parties d'appui (20, 21, 22) comportent chacune un sommet (P) au niveau duquel une section transversale, dans une direction de la largeur de la bande de roulement (2), déborde le plus vers l'extérieur dans une direction radiale du bandage pneumatique (1) ; et
une distance $D_0$ entre le sommet (P) et un bord d'ouverture (B) de chacune des rainures circonférentielles (10, 11, 12, 13), dans la direction radiale du bandage pneumatique (1), et la profondeur D des rainures circonférentielles (10, 11, 12, 13) satisfont l'expression ci-dessous :

$$0{,}044 \leq D_0/D \leq 0{,}155.$$

FIG. 1

FIG. 2

# FIG. 3

# FIG. 4

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012116410 A

- WO 2015182151 A